# EUROPEAN PATENT APPLICATION

(11) **EP 2 530 972 A1**
(43) Date of publication of application: **05.12.2012**
(21) Application number: 10848209.2
(22) Date of filing: 28.05.2010
(51) Int. Cl.: H04W 36/08

(54) **METHOD AND DEVICE FOR CONFIGURING RADIO RESOURCES DURING HANDOVER**

(30) Priority: 23.03.2010 CN 201010139729
(71) Applicant: ZTE Corporation, Shenzhen, Guangdong 518057 (CN)
(72) Inventor: ZHOU, Ping, Shenzhen Guangdong 518057 (CN)
(74) Representative: Lambert, Ian Robert
(86) International application number: PCT/CN2010/073343
(87) International publication number: WO 2011/116547

(57) **Abstract**

The disclosure discloses a method for configuring radio resources during a handover, which includes: an evolved NodeB (eNB) issues a handover command to a User Equipment (UE), wherein the handover command carries radio resource configuration parameters; after receiving the handover command, the UE configures radio resource configuration parameters, which may become effective directly, in the radio resource configuration parameters, and takes the configured radio resource configuration parameters into effect; after initiating a handover Random Access (RA), the UE discards radio resource configuration parameters, which could not become effective directly, in the radio resource configuration parameters, when the UE determines that the handover RA fails. The disclosure also discloses a device for configuring radio resources during a handover correspondingly. By distinguishing the radio resource configuration parameters which may become effective directly and which could not become effective directly in the disclosure, the problem of reverting operation after a handover fails in the present handover technology is solved, the service interruption time is shortened, the system overhead is saved, the resource utilization ratio and stability of the system are improved, and strong operability and practicality are provided.

## Description

### TECHNICAL FIELD

The disclosure relates to a handover technology in communications, and in particular to a method and a device for configuring radio resources during a handover.

### BACKGROUND

According to different standards, there are many different types of handovers. For example, depending on networking forms, handovers can be divided into inter-frequency handovers and intra-frequency handovers. Depending on the triggering reason, handovers can be divided into load based handovers, coverage based handovers, service based handovers and User Equipment (UE) movement speed-based handovers. Depending on the network topology, handovers can also be divided into handovers inside an evolved NodeB (eNB), handovers between different eNBs in a same mobility management entity (MME), and handover between different eNBs in different MMEs. However, regarding to the UE, handovers are divided into contention handovers and non-contention handovers depending on whether there is a dedicated preamble; however, at present, the radio resource configuration flows during the contention handover and the non-contention handover are consistent.

Currently, the existing radio resource configurations during the handover are divided into two types, namely a common radio resource configuration and a dedicated radio resource configuration. The dedicated radio resource configuration is further divided into three types: for the first type, the radio resource configuration is taken into effect after the handover succeeds, wherein Data Radio Bearer (DRB) configuration, measurement gap configuration, Channel Quality Indication (CQI) configuration, Scheduling Request (SR) configuration and Sounding Reference Symbol (SRS) configuration all belong to the first type; the second type includes three configurations, namely dedicated physical configuration (physical Config dedicated), MAC configuration (mac-Main Config) and semi-persistent scheduling configuration (sps-Config), which is taken into effect instantly; the third type is the dedicated radio resource configurations other than the first and second types, mainly including the modification of Signaling Radio Bearer (SRB) and the addition and modification of the DRB, which is taken into effect instantly. The common radio resource configurations and the above dedicated radio resource configurations of the second and third types are taken into effect instantly, while the first type of dedicated radio resource configurations are taken into effect after the handover succeeds.

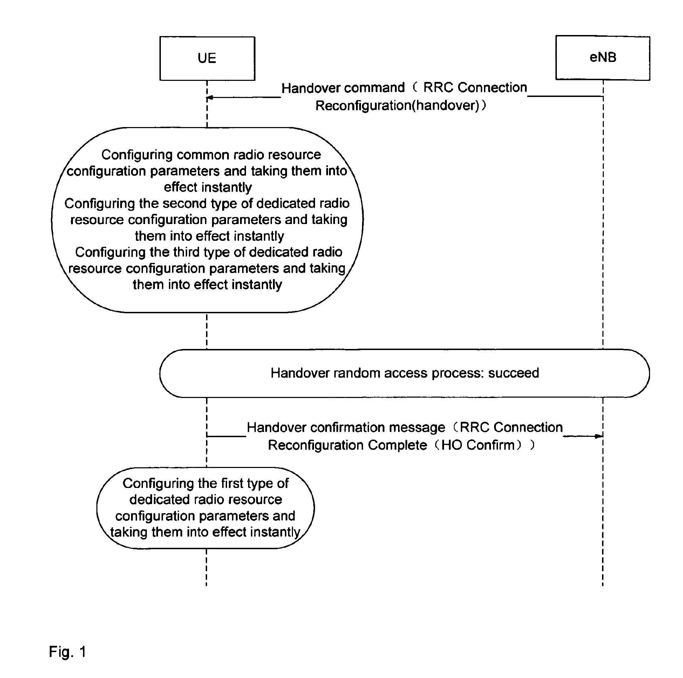

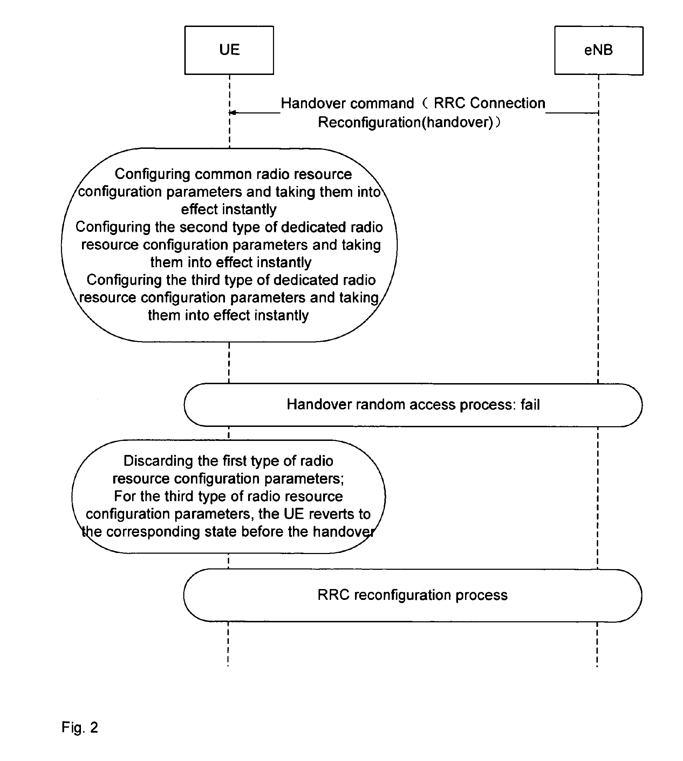

Fig. 1 shows a flowchart of the processing of the radio resource configurations after a UE handover succeeds according to the related art. Fig. 2 shows a flowchart of the processing of the radio resource configuration after a UE handover fails according to the related art. It can be seen that, in present protocols, the processing of the radio resource process flows when the handover succeeds is: if handover fails, the three types of dedicated radio resource configurations have to be reverted to the configurations by a source cell.

In present protocols, the radio resource configurations during a handover can be divided into reverting-unnecessary configurations and reverting-necessary configurations according to whether reverting is necessary after handover fails; the reverting-unnecessary configurations include common radio resource configurations, the first and second types of dedicated radio resource configurations; the reverting-necessary configurations refer to the third type of dedicated radio resource configurations.

Therefore, if handover fails, the operations performed for the third type of dedicated radio resource configurations seem to be redundant; before and after the handover, configurations need to be performed twice. However, the outcome is that the configuration is reverted to the configuration before handover. Therefore, system resources are wasted and service interruption time is prolonged. Further, the third type of dedicated configurations mainly include the modification configurations for SRB (excluding SRBO) and the addition and modification configurations for DRB; however, these configurations are not used before the handover Random Access (RA) succeeds. Once the handover fails, the operations preformed for the third type of dedicated configurations before handover are useless.

### SUMMARY

The technical problem to be solved by the disclosure is to provide a method and a device for configuring radio resources during a handover, capable of solving the problem of reverting operation after a handover fails in the present handover technology, shortening service interruption time, saving system overhead, improving system resource utilization ratio and system stability, and providing strong operability and practicality.

In order to solve the problem above, the disclosure provides a method for configuring radio resources during a handover, which includes:
an evolved NodeB (eNB) issues a handover command to a User Equipment (UE), wherein the handover command carries radio resource configuration parameters; after receiving the handover command, the UE configures radio resource configuration parameters, which may become effective directly, in the radio resource configuration parameters, and takes the configured radio resource configuration parameters into effect;
after initiating handover Random Access (RA), the UE discards radio resource configuration parameters, which could not become effective directly, in the radio resource configuration parameters, when the UE determines that the handover RA fails .

Further, the above method further includes: after initiating the handover RA, the UE configures the radio resource configuration parameters, which could not become effective directly, in the radio resource configuration parameters, and takes the configured radio resource configuration parameters into effect, and transmits a handover confirmation message to the eNB, when the UE determines that handover RA succeeds,

Further, the radio resource configuration parameters which may become effective directly, may include one or more of the following: Signaling Radio Bearer (SRB), dedicated physical configuration (physical Config dedicated), MAC configuration (mac-Main Config) and semi-persistent scheduling configuration (sps-Config), which are included in common radio resource configuration and dedicated radio resource configuration.

Further, the radio resource configuration parameters which could not become effective directly, may include one or more of the following: Data Radio Bearer (DRB) configuration, measurement gap configuration, Channel Quality Indication (CQI) configuration, Scheduling Request (SR) configuration and Sounding Reference Symbol (SRS) configuration.

Further, the method may further include, after the UE discards the radio resource configuration parameters which could not become effective directly, the UE initiates a Radio Resource Control protocol (RRC) reestablishing process triggered by a handover failure to recover connection.

The disclosure also provides a device for configuring radio resources during a handover, which includes: a receiving unit and a control unit, wherein
the receiving unit is configured to receive a handover command which is issued by an evolved NodeB (eNB) and carries radio resource configuration parameters, and to transmit the handover command to the control unit;
the control unit is configured to configure radio resource configuration parameters, which may become effective directly, in the received radio resource configuration parameters, and to take the configured radio resource configuration parameters into effect; to discard radio resource configuration parameters, which could not become effective directly, in the radio resource configuration parameters, when it is determined that the handover RA fails, after a handover Random Access (RA) is initiated.

Further, the control unit may be further configured to configure the radio resource configuration parameters, which could not become effective directly, in the radio resource configuration parameters, and to take the configured radio resource configuration parameters into effect, and to transmit a handover confirmation message to the eNB, when it is determined that access succeeds, after the handover RA is initiated.

Further, the radio resource configuration parameters which may become effective directly and are configured by the control unit may include one or more of the following: Signaling Radio Bearer (SRB), dedicated physical configuration (physical Config dedicated), MAC configuration (mac-Main Config) and semi-persistent scheduling configuration (sps-Config), which are included in common radio resource configuration and dedicated radio resource configuration.

Further, the radio resource configuration parameters which could not become effective directly and are configured by the control unit, may include one or more of the following: Data Radio Bearer (DRB) configuration, measurement gap configuration, Channel Quality Indication (CQI) configuration, Scheduling Request (SR) configuration and Sounding Reference Symbol (SRS) configuration.

Further, the control unit is further configured to initiate, after discarding the radio resource configuration parameters which could not become effective directly, a Radio Resource Control (RRC) protocol reestablishing process triggered by a handover failure to recover connection.

Compared with the related art, by adopting the disclosure, the problem of reverting operation after a handover fails in the present handover technology is solved, the service interruption time is shortened, the system overhead is saved, the resource utilization ratio and stability of system are improved, and strong operability and practicality are provided.

### BRIEF DESCRIPTION OF THE DRAWINGS

Fig. 1 shows a flowchart of the processing of the radio resource configuration after a UE handover succeeds according to the related art;
Fig. 2 shows a flowchart of the processing of the radio resource configuration after a UE handover fails according to the related art;
Fig. 3 shows a flowchart of the processing of the radio resource configuration after a UE handover succeeds according to the disclosure;
Fig. 4 shows a flowchart of the processing of the radio resource configuration after a UE handover fails according to the disclosure;
Fig. 5 shows a structure diagram of a device for configuring radio resources during a handover according to the disclosure.

### DETAILED DESCRIPTION

The disclosure is further illustrated below in conjunction with accompanying drawings and specific embodiments.

The main idea of the disclosure is that: the radio resource configuration parameters carried in the handover command are divided into two types; one type is the radio resource configuration parameters which may become effective directly, including one or more of the following: SRB, physical Config dedicated configuration, mac-Main Config configuration and sps-Config, which are included in common radio resource configuration and dedicated radio resource configuration; the other type is the radio resource configuration parameters which could not become effective directly, including one or more of the following: DRB configuration, measurement gap configuration, CQI configuration, SR configuration and SRS configuration; wherein the radio resource configuration, which may become effective directly, is taken into effect immediately after the handover command is received, while the radio resource configuration, which could not become effective directly, is taken into effect after the handover succeeds and is discarded after the handover fails, in this way, the reverting operation after handover fails is avoided, the service interruption time is shortened and the system overhead is saved.

In the disclosure, SRB is also classified into the radio resource configuration which may become effective directly, because an RRC Connection Reconfiguration Complete message is to be sent on SRB1 after a handover RA succeeds; if handover fails, an RRC reestablishing process is automatically triggered and then the SRB1 is reconfigured; therefore, no influence is caused when SRB is classified into the radio resource configuration which may become effective directly.

The method in the embodiment of the disclosure is to process radio resource configuration when a UE performs a handover command initiated by a network side, wherein the embodiment includes examples of handover success and examples of handover failure.

Other operations that are performed by the UE and are irrelevant to the radio resource configuration during a handover, such as, synchronizing to a target cell, are not within the description scope of the disclosure.

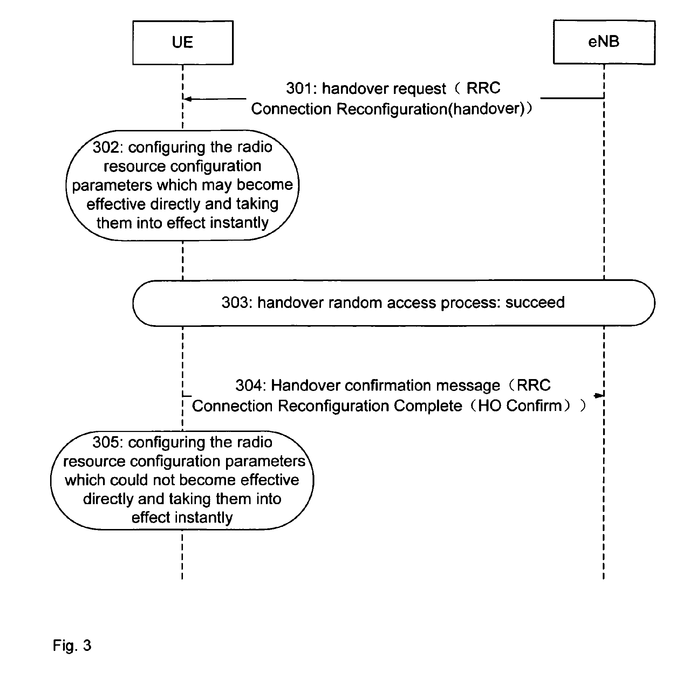

Fig. 3 shows a flowchart of the processing of the radio resource configuration after a UE handover succeeds according to the disclosure; as shown in Fig. 3, the flow includes:
Step 301: an evolved NodeB (eNB) issues a handover command to a User Equipment (UE), wherein the handover command carries the radio resource configuration parameters;
Step 302: after receiving the handover command, the UE directly configures the radio resource configuration parameters, which may become effective directly, in the radio resource configuration parameters to a corresponding module and takes them into effect instantly;
the radio resource configuration parameters which may become effective directly may include one or more of the following: SRB, physical Config dedicated, mac-Main Config and sps-Config, which are included in common radio resource configuration and dedicated radio resource configuration;
Step 303: the UE initiates a handover RA and determines that the handover RA succeeds;
Step 304: the UE transmits a handover confirmation message to the eNB and confirms that the handover succeeds;
Step 305: the UE configures the radio resource configuration parameters, which could not become effective directly, in the radio resource configuration parameters and takes them into effect instantly, wherein the radio resource configuration parameters which could not become effective directly may include DRB, gap, CQI, SR and SRS configurations and the like.

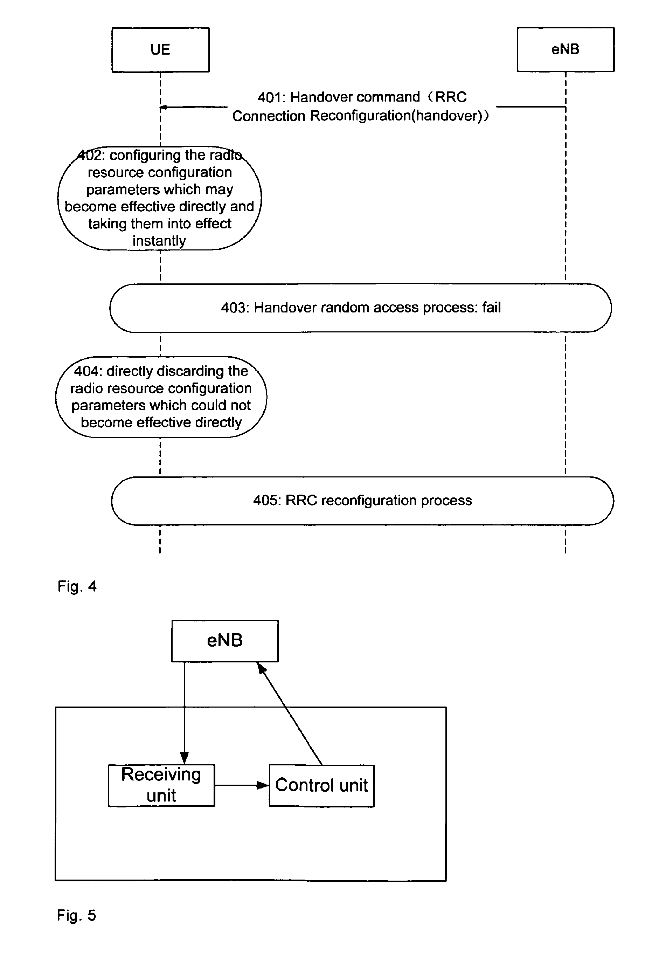

Fig. 4 shows a flowchart of the processing of the radio resource configuration after a UE handover fails according to the disclosure; as shown in Fig. 4, an example of handover failure includes:
Step 401: an evolved NodeB (eNB) transmits a handover command to a User Equipment (UE), wherein the handover command carries the radio resource configuration parameters;
Step 402: after receiving the handover command, the UE directly configures the radio resource configuration parameters, which may become effective directly, in the radio resource configuration parameters to a corresponding module and takes them into effect instantly;
the radio resource configuration parameters which may become effective directly may include one or more of the following: SRB, physical Config dedicated, mac-Main Config and sps-Config, which are included in common radio resource configuration and dedicated radio resource configuration;
Step 403: the UE initiates a handover RA and determines that the handover RA fails;
Step 404: the UE directly discards the radio resource configuration parameters, which could not become effective directly, in the radio resource configuration parameters, wherein the radio resource configuration parameters which could not become effective directly may include DRB, gap, CQI, SR and SRS configurations and the like;
Step 405: the UE initiates an RRC reestablishing process triggered by a handover failure to recover connection, wherein the RRC reestablishing process can trigger a reconfiguration of radio resources.

By comparing the implementation scheme of the disclosure with the related art, the advantages of the disclosure can be fully highlighted. In the related art, when a UE handover fails, the three types of radio resource configuration parameters (including modifications of SRB, additions and modifications of DRB) are reverted to the configuration state issued by a source cell before the handover, then an RRC reestablishing process triggered by the handover failure can be initiated to recover the connection; however, the reverting-necessary configurations have not been used after the UE takes the configurations into effect, it is indicated that the configuration for the parameters are redundant once the handover fails, thus not only the service interruption time during a handover is increased, but also the system resource is wasted.

As shown in Fig. 4, in the implementation scheme of the disclosure, modifications are made as follows: all the radio resource configurations during a handover are divided into reverting-necessary configurations and reverting-unnecessary configurations after the handover fails, wherein the reverting-unnecessary configurations are taken into effect uniformly before the handover while the reverting-necessary configurations are taken into effect after the handover succeeds; in this way, when the handover fails, twice the time and space resources used for parameter reverting operation are saved and the system resource utilization ratio is increased.

A method for radio resource process during the handover according to the disclosure is not only limited to the applications described in the specification and implementation scheme, but also suitable for all fields applicable for the disclosure.

Fig. 5 shows a structure diagram of a device for configuring radio resources during a handover according to the disclosure; as shown in Fig. 5, the device for configuring radio resources during a handover according to the disclosure includes: a receiving unit and a control unit, wherein
the receiving unit may be configured to receive a handover command which is issued by an evolved NodeB (eNB) and carries the radio resource configuration parameters, and to transmit the handover command to the control unit;
the control unit may be configured to configure radio resource configuration parameters, which may become effective directly, in the received radio resource configuration parameters, and to take the configured radio resource configuration parameters into effect; to discard radio resource configuration parameters, which could not become effective directly, in the radio resource configuration parameters, when it is determined that the handover RA fails, after a handover Random Access (RA) is initiated;
the control unit may further be configured to transmit a handover confirmation message to the eNB and to configure the radio resource configuration parameters, which could not become effective directly, in the radio resource configuration parameters, and to take the configured radio resource configuration parameters into effect, when it is determined that the handover RA succeeds, after initiating handover RA;
the radio resource configuration parameters, which may become effective directly and are configured by the control unit, may include one or more of the following: SRB, physical Config dedicated, mac-Main Config and sps-Config, which are included in common radio resource configuration and dedicated radio resource configuration.

The radio resource configuration parameters which could not become effective directly and are configured by the control unit, may include one or more of the following: DRB configuration, measurement gap configuration, CQI configuration, SR configuration and SRS configuration.

The control unit may further be configured to initiate, after discarding the radio resource configuration parameters which could not become effective directly, a Radio Resource Control (RRC) protocol reestablishing process triggered by a handover failure to recover connection.

The above is only the preferred specific embodiment of the disclosure; however, the protection scope of the disclosure is not limited to the above; any changes and substitutes made by those skilled in the art within the technical scope of the disclosure are deemed to be included within the protection scope of the disclosure; therefore, the protection scope of the disclosure should be based on the protection scope of the claims.

## Claims

1. A method for configuring radio resources during a handover, comprising:
issuing, by an evolved NodeB (eNB), a handover command to a User Equipment (UE), wherein the handover command carries radio resource configuration parameters;
after receiving the handover command by the UE, configuring, by the UE, radio resource configuration parameters, which may become effective directly, in the radio resource configuration parameters, and taking, by the UE, the configured radio resource configuration parameters into effect;
after initiating a handover Random Access (RA) by the UE, discarding, by the UE, radio resource configuration parameters, which could not become effective directly, in the radio resource configuration parameters, when the UE determines that the handover RA fails.

2. The method according to claim 1, further comprising:
after initiating the handover RA by the UE,
configuring, by the UE, the radio resource configuration parameters, which could not become effective directly, in the radio resource configuration parameters, and taking, by the UE, the configured radio resource configuration parameters into effect, when the UE determines that the handover RA succeeds, and transmitting a handover confirmation message to the eNB.

3. The method according to claim 1, wherein the radio resource configuration parameters which may become effective directly comprise one or more of the following:
Signaling Radio Bearer (SRB), dedicated physical configuration (physical Config dedicated), MAC configuration (mac-Main Config) and semi-persistent scheduling configuration (sps-Config), which are included in common radio resource configuration and dedicated radio resource configuration.

4. The method according to claim 1, wherein the radio resource configuration parameters which could not become effective directly comprise one or more of the following:
Data Radio Bearer (DRB) configuration, measurement gap configuration, Channel Quality Indication (CQI) configuration, Scheduling Request (SR) configuration and Sounding Reference Symbol (SRS) configuration.

5. The method according to claim 1, further comprising:
initiating, by the UE, after discarding the radio resource configuration parameters, which could not become effective directly, a Radio Resource Control (RRC) reestablishing process triggered by handover failure to recover connection.

6. A device for configuring radio resources during a handover, comprising: a receiving unit and a control unit, wherein
the receiving unit is configured to receive a handover command which is issued by an evolved NodeB (eNB) and carries radio resource configuration parameters, and to transmit the handover command to the control unit;
the control unit is configured to configure radio resource configuration parameters, which may become effective directly, in the received radio resource configuration parameters, and to take the configured radio resource configuration parameters into effect; to discard radio resource configuration parameters, which could not become effective directly, in the radio resource configuration parameters, when it is determined that the handover RA fails, after a handover Random Access (RA) is initiated.

7. The device according to claim 6, wherein
the control unit is further configured to configure the radio resource configuration parameters, which could not become effective directly, in the radio resource configuration parameters, and to take the configured radio resource configuration parameters into effect, and to transmit a handover confirmation message to the eNB, when it is determined that handover RA succeeds, after the handover RA is initiated.

8. The device according to claim 6, wherein the radio resource configuration parameters, which may become effective directly and are configured by the control unit, comprise one or more of the following: Signaling Radio Bearer (SRB), dedicated physical configuration (physical Config dedicated), MAC configuration (mac-Main Config) and semi-persistent scheduling configuration (sps-Config), which are included in common radio resource configuration and dedicated radio resource configuration.

9. The device according to claim 6, wherein the radio resource configuration parameters, which could not become effective directly and are configured by the control unit, comprise one or more of the following: Data Radio Bearer (DRB) configuration, gap configuration, Channel Quality Indication (CQI) configuration, Scheduling Request (SR) configuration and Sounding Reference Symbol (SRS) configuration.

10. The device according to claim 6, wherein the control unit is further configured to initiate, after discarding the radio resource configuration parameters which could not become effective directly, a Radio Resource Control (RRC) protocol reestablishing process triggered by a handover failure to recover connection.
